# EUROPEAN PATENT APPLICATION

(11) **EP 4 685 173 A1**
(43) Date of publication of application: **28.01.2026**
(21) Application number: 24306236.1
(22) Date of filing: 23.07.2024
(51) Int. Cl.: C08G 61/08, C08L 65/00, C09D 165/00

(54) **A METHOD FOR PREPARING A POLYMER MATERIAL FROM A CYCLIC OLEFIN COMPOSITION WITH CONTROLLED VISCOSITY**

(71) Applicant: VIPO FRANCE SAS, 35000 Rennes (FR)
(72) Inventor: BEUGUEL, Quentin, 35190 St Thual (FR); QUEVAL, Pierre, 35137 Pleumeleuc (FR)
(74) Representative: Renard, Emmanuelle

(57) **Abstract**

The present invention relates to a method for preparing a polymer material, comprising the successive steps of: (A) providing a prepolymer-containing monomer composition having a target viscosity, wherein said prepolymer-containing monomer composition comprises a cyclic olefin and a prepolymer of said cyclic olefin and optionally of a chain-transfer agent, (B) adding a polymerizer selected from metathesis catalysts to said prepolymer-containing monomer composition, so as to obtain a resin composition, and (C) curing said resin composition.

## Description

### FIELD OF THE INVENTION

The present invention relates to a method for preparing a polymer material, comprising the successive steps of: (A) providing a prepolymer-containing monomer composition having a target viscosity, wherein said prepolymer-containing monomer composition comprises a cyclic olefin and a prepolymer of said cyclic olefin and optionally of a chain-transfer agent, (B) adding a polymerizer selected from metathesis catalysts to said prepolymer-containing monomer composition, so as to obtain a resin composition, and (C) curing said resin composition.

### BACKGROUND OF THE INVENTION

Polydicyclopentadiene or p-DCPD is a thermoset polyolefin that is valued for its light weight, rigidity and properties of impact strength, corrosion resistance and resistance to deformation at high temperature. It is mainly used in the manufacture of parts with large dimensions such as body elements for cars, tractors, buses or trucks.

p-DCPD is generally obtained by ring-opening metathesis of DCPD (or ROMP for "Ring-Opening Metathesis Polymerization"), followed by crosslinking, leading to the following product:

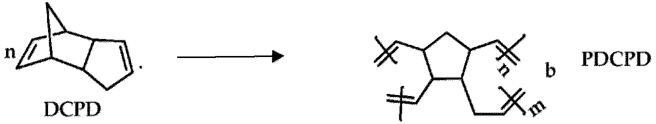

This transformation is generally carried out in a mold by the so-called reaction injection molding (RIM) technique. The metathesis reaction is usually carried out in the presence of catalysts based on tungsten, molybdenum or ruthenium.

One common problem with pure DCPD is that it is solid at room temperature. In order to be used in molding processes, DCPD thus needs to be slightly heated or blended with another olefin such as ethylidene norbomene (ENB) or tricyclopentadiene (TCPD), which is the cycloaddition product of DCPD with cyclopentadiene. The resulting mixture is liquid but its low viscosity prevents an appropriate flow control when injected into a mold, and results in thermoset materials having surface defects such as bubbles. Low viscosity also increases the risk of leakage in the mold and may thus represent a safety issue. Viscosity is typically adjusted by adding rheology modifiers such as soluble polymers, before conducting the ROMP reaction. However, it has been shown that the thermoset material thus obtained has an unpleasant odor and is thus not suitable for use in vehicle cabins. In addition, some polymeric rheology modifiers create nodules within the material which in turn provide micro-cavities or white marks under deformation. In some cases where the nodules are micrometric, they can also lead to a final material which is opaque and this can be problematic if transparency is required. Another approach to increase the viscosity of cycloolefin mixtures involves adding fillers such as inorganic platelets, silica particles, glass beads or carbon blacks to these mixtures. However, when added to a liquid resin, fillers can sediment or aggregate relatively fast, which affects the homogeneity of the material. In addition, some fillers can be responsible for abrasion of the dosing and injection equipment, and they may also interact negatively with the catalyst. Then it is not advisable to use them only for the purpose of viscosity adjustment.

Finally, it is hardly possible to adjust independently the viscosity of the resin composition and the final properties of the resulting polymer material by only adding polymers and fillers to the resin composition mixture.

Thus, it would be desirable to provide a solution to adjust the viscosity of a cycloolefin resin for process convenience, without necessarily adding polymers, such as elastomers, and/or fillers, or else under conditions which delay the sedimentation of fillers.

In this respect, it has been proposed to set the viscosity of a solution of solid DCPD by diluting the same with a reactive ethylene monomer such as an alkyl norbomene, which acts as a solvent to reach the desired viscosity and thus provides thermoset articles devoid of surface defects (WO2013/085846). This solution is not entirely satisfactory either, because it leads to a sharp phase transition from solid to liquid with a viscosity lower than few mPas.s, even when minor amounts of reactive monomer are used. Besides, the components of the cycloolefin resin cannot be easily tuned because specific reactive monomers at specific concentrations need to be included.

It is also common practice to add chain-transfer agents to cycloolefins in order to control the polymer chain length and thus their viscosity and processability (US2021/246260). This reaction is conducted in the presence of a catalyst and typically of an organic solvent such as toluene. The oligomers thus obtained are then isolated and dried.

It has further been known to prepare oligomers of DCPD in a solvent-less reaction, wherein a phosphite ester is added to the cyclic olefin and a chain-transfer agent in the presence of a first amount of a catalyst (WO2023/215709). The phosphite ester acts as a retardant to avoid premature reaction during frontal ring-opening metathesis oligomerization (FROMO). The oligomers thus obtained are isolated and dried. The authors mention that they may then be used as rheological modifiers with cycloalkene monomers such as DCPD in 3D-printing by FROMP. For this purpose, the oligomers are mixed with DCPD and with an additional amount of catalyst and phosphite ester.

The last two processes appear to be too expensive for industrial use, especially because they include a step of isolating and drying the prepolymer. In addition, the solid prepolymer is at risk of oxidation and thus needs proper storage conditions, as explained in WO2023/215709.

Therefore, there is still a need for a cost-effective method of providing polymer materials based on cycloolefins such as DCPD from a formulation having a desired viscosity at room temperature, without the problems encountered in the prior art. It would also be desirable to provide a prepolymer composition, the viscosity of which is stable for several weeks or months. In a specific aspect of this invention, it would further be desirable to provide polymer materials based on cycloolefins, which may result after curing in products devoid of surface defects, lacking any perceptible odor and/or which are homogeneous (and possibly transparent).

### SUMMARY OF THE INVENTION

The inventors have now found that the above problems could be solved by preparing the polymer material in two steps, involving first the formation of prepolymers of a cyclic olefin such as DCPD in admixture with said cyclic olefin, until a target viscosity is reached, and then final curing of the material.

The invention thus relates to a method for preparing a polymer material, comprising the successive steps of: (A) providing a prepolymer-containing monomer composition having a target viscosity, wherein said prepolymer-containing monomer composition comprises a cyclic olefin and a prepolymer of said cyclic olefin and optionally of a chain-transfer agent, (B) adding a polymerizer selected from metathesis catalysts to said prepolymer-containing monomer composition, so as to obtain a resin composition, and (C) curing said resin composition.

### DETAILED DESCRIPTION

### Definitions

"Monomer" refers to a single compound having a non-repeating structure.

"Polymer" refers to a compound comprising repeating units linked by a covalent bond.

"Prepolymer" is a polymer which comprises reactive groups and is capable of further polymerization to a fully polymerized, high-molecular mass state or crosslinked state. It refers to the reaction product of monomers (which may be identical or different from each other) which have been reacted to an intermediate molecular mass state.

"Halogen" means fluorine, chlorine, bromine or iodine.

"Cycloalkyl" means a cyclic aliphatic hydrocarbon group, which may be monocyclic or polycyclic, optionally substituted. When the group is polycyclic, i.e. when it comprises more than one ring, the rings may advantageously be condensed in pairs or joined together in pairs by bonds. The cycloalkyl group is for example a monocyclic hydrocarbon group having a number of carbon atoms greater than 2, preferably from 3 to 24, more preferably from 4 to 12, preferably a cyclopentyl, cyclohexyl, cycloheptyl, cyclooctyl or cyclododecyl group, or a polycyclic (bi- or tricyclic) group having a number of carbon atoms greater than 3, preferably from 6 to 18, such as for example the adamantyl, norbornyl or isopinocampheyl groups.

"Alkyl" means a linear or branched, saturated hydrocarbon group containing from 1 to 14 carbon atoms, notably a methyl, ethyl, isobutyl, octyl or dodecyl group. The alkyl group preferably has from 1 to 10 carbon atoms, and even more preferably from 1 to 4 carbon atoms. Examples of preferred alkyl groups are notably the methyl, ethyl, propyl, isopropyl, butyl, isobutyl and *tert*-butyl groups.

"Heteroalkyl" group means a linear or branched hydrocarbon-containing chain having from 2 to 15 carbon atoms interrupted by one or more heteroatoms such as N, S or O. The heteroalkyl group may in particular be selected from the polyalkylene-oxy groups, the alkoxy groups and the alkylamino groups.

"Alkenyl" means a linear or branched unsaturated hydrocarbon group, containing from 2 to 14 carbon atoms, notably a vinyl, isopropenyl or butenyl group.

"Aryl" means a carbocyclic group with 6 to 20 ring members, mono- or polycyclic, containing conjugated double bonds. Examples of aryl groups are phenyl and naphthyl.

"Heteroaryl" means a mono- or polycyclic aromatic group, each ring of which contains from 3 to 6 ring members and of which at least one ring member contains a heteroatom, notably a thiophenyl, pyridinyl, pyrrolyl, furanyl, indolyl, thiophenyl, benzofuranyl, benzothiophenyl, imidazolyl, oxazolyl, thiazolyl, pyrazolyl, isoxazolyl, isothiazolyl, quinolinyl, isoquinolinyl group.

"Carbocycle" means a mono- or polycyclic hydrocarbon group, which may be a saturated or unsaturated aliphatic group or an aromatic group, containing from 5 to 20 carbon atoms, in particular an indenyl group.

"N-heterocyclic carbene or NHC" means a cyclic saturated or unsaturated carbene containing at least one nitrogen, and optionally a sulphur or oxygen atom. The said nitrogen can be substituted. Examples of NHC are normal N-heterocyclic carbenes, abnormal N-heterocyclic carbenes (aNHC), cyclic alkylamino carbenes (CAAC), triazolylidene.

"N-heteroacyclic carbene" means an acyclic carbene containing at least one nitrogen, and optionally a sulphur or oxygen atom in the main chain. The said nitrogen can be substituted. Examples of N-heteroacyclic carbenes are acyclic diaminocarbenes (ADC), acyclic aminocarbenes (AAC), acyclic aminooxy carbenes (AAOC).

This invention pertains to a method for preparing a polymer material.

This method comprises the successive steps of:
(A) providing a prepolymer-containing monomer composition having a target viscosity, wherein said prepolymer-containing monomer composition comprises a cyclic olefin and a prepolymer of said cyclic olefin and optionally of a chain-transfer agent,
(B) adding a polymerizer selected from metathesis catalysts to said prepolymer-containing monomer composition, so as to obtain a resin composition, and
(C) curing said resin composition.

In an embodiment, this method comprises the successive steps of: (1) preparing a prepolymer-containing monomer composition from (i) a polymerizer selected from catalysts and initiators and (ii) a monomer composition comprising a cyclic olefin and optionally a chain-transfer agent, (2) maturing the prepolymer-containing monomer composition until a target viscosity is reached, (3) adding a second amount of a polymerizer selected from metathesis catalysts, so as to obtain a resin composition, and (4) curing said resin composition.

### Cyclic olefin

By "cyclic olefins" it is meant monocyclic or polycyclic compounds, optionally bridged or fused, having at least one carbon-carbon double bond and which may be substituted by at least one alkyl or alkenyl group, and optionally functionalized. The cyclic olefin is advantageously selected from bridged or fused cycloalkenes, non-bridged cycloalkenes, and mixtures thereof. The bridged or fused cycloalkenes are generally the reaction products of a conjugated diene with a dienophile such as an alkene or alkyne (Diels-Alder reaction). Cyclopentadiene (CPD) is an example of compound which acts both as a diene and as a dienophile. Fused cycloalkenes may comprise CPD oligomers such as dicyclopentadiene (DCPD), tricyclopentadiene (TCPD), tetracyclopentadiene (TeCPD) and the like, but also norbomene and norbornadiene and mixtures thereof.

The non-bridged cycloalkenes may notably be selected from cyclopentene, cyclohexene, cycloheptene, cyclooctene (COE), cyclododecene, cyclooctadiene (COD) and mixtures thereof. Examples of substituted cyclic olefins are ethylidene norbomene (ENB), alkyl norbornenes (such as decylnorbomene, octylnorbomene, hexylnorbomene, tolylnorbomene), norbomene maleic anhydride, norbomene methanol, norbomene triethoxysilane, norbomene methylamine, dimethanoloctahydronaphthalene (DMON) and mixtures thereof. Preferably, the substituted cyclic olefin does not comprise a terminal double bond out of its ring or a triple carbon-carbon bond.

Among the above cyclic olefins, dicyclopentadiene or mixtures thereof with at least one other cyclic olefin are preferred for use in this invention. The other cyclolefin may be selected from: tricyclopentadiene (TCPD), norbomene (NBE), ethylidene norbomene (ENB), norbomadiene, dimethanoloctahydronaphthalene (DMON), cyclopentene, cyclohexene, cycloheptene, cyclooctene, cyclododecene, cyclooctadiene, decylnorbomene, octylnorbomene, hexylnorbomene, tolylnorbomene and mixtures thereof, preferably tricyclopentadiene (TCPD), ethylidene norbomene (ENB), cyclooctadiene (COD) and/or cyclooctene (COE), more preferably tricyclopentadiene.

Mixtures of cyclic olefins make it possible to adjust the properties of the material. When DCPD is mixed with one or more other cyclic olefins, the molar ratio of DCPD to the total number of moles of these other cyclic olefins may be for example between 0.01:1 and 100:0.1, for example between 0.1:1 and 100:1, more particularly between 1:1 and 15:1.

Hereinafter, the term "cyclic olefin" refers to both a single cyclic olefin and a mixture of different cyclic olefins. It must therefore be understood as being equivalent to "one or more cyclic olefins".

### Chain-transfer agent

Chain-transfer agents (CTA) are compounds containing at least one acyclic carbon-carbon double bond or triple bond. These compounds are preferably only made of carbon and hydrogen atoms (i.e. hydrocarbons). They may be selected from compounds generally used to control ROMP polymerization and final material properties. These compounds may be linear or branched, and have an internal or preferably terminal carbon-carbon double bond or a terminal triple bond. In another embodiment, these compounds may be selected from cyclic, possibly aromatic, compounds bearing at least one substituent comprising a double bond in terminal position, such as a vinyl substituent.

Examples of chain-transfer agents include: acyclic alkenes, preferably linear alkenes, such as hexene, octene, decene, undecene, dodecene; alkynes such as 1-hexyne, 1-octyne, 12-decyne, 1-dodecyne, 4-methyl-1-pentyne, phenylacetylene; cyclic compounds such as vinyl norbomene, and styrene; and mixtures thereof. Chain-transfer agents comprising at least one heteroatom may be selected from: allyl glycidyl ether, allyl isocyanate, isocyanatodecene, isocyanatoundecene, triethoxyvinyl silane, octenol, decenol, undecenol, 5-hexyn-1-ol; and mixtures thereof.

### Polymerizers

The polymerizer used in step (1) of this process may be selected from any catalyst or initiator typically used for preparing oligomers or prepolymers by ionic polymerization, addition polymerization or olefin metathesis polymerization. It may thus be selected from radical generators (such as peroxides), metathesis catalysts, ionic initiators and addition catalysts.

Examples of radical generators are thermally-activated free-radical initiators such as peroxides and azo initiators, examples of which are: di-tert-butyl peroxide (DTBP), dicumyl peroxide (DCP), benzoyl peroxide (BPO), cumene hydroperoxide (CHP), methyl ethyl ketone peroxide (MEKP) and azobisisobutyronitrile (AIBN).

Examples of ionic initiators and addition catalysts can be found in: J. Polym. Sci. 49, 287 (1961); J. Polym. Sci.:Part A-1, 4, 869 (1966); Stud. Surf. Sci. Catal. 131, 319 (2000); Coord. Chem. Rev. 253, 827 (2009); Macromolecules, 47, 5470 (2014); Catalysts, 6, 175 (2016); Polym. Chem. 11, 2576 (2020); Chem. Cat. Chem. 15, e202300818 (2023); , the content of which is incorporated herein by reference. They may especially be used with cyclic olefins comprising at least two unsaturated bonds.

Hereinafter, "polymerizer" will denote both a single polymerizer or a mixture of polymerizers.

Preferably, the polymerizer used in step (1) of this process comprises a metathesis catalyst which is advantageously the same catalyst as that used in step (3)/(B).

The metathesis catalyst, which is optionally *in-situ* reconstituted, is typically selected from group VIII, group VII, group VI and group V metal complexes and preferably comprises at least one iron, rhenium, vanadium, ruthenium, tungsten, tantalum, osmium or molybdenum complex, more preferably at least one ruthenium, tungsten or molybdenum complex and still preferably one or more ruthenium alkylidene complexes.

Examples of molybdenum catalysts are Schrock's catalysts shown below:

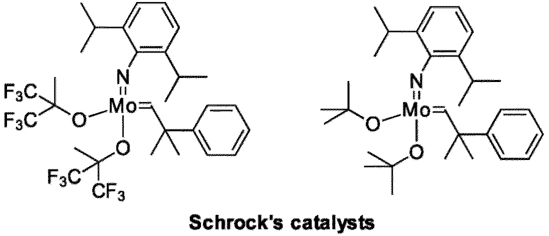

"Ruthenium alkylidene complex" refers to a tetra-, penta- or hexa-coordinated ruthenium complex comprising an alkylidene ligand. Examples of ruthenium alkylidene complexes are M101, M102, M202, M204, M207, M300, M310, M350, M520 (Umicore Grubbs catalysts), M720, M711 (Umicore Hoveyda-Grubbs catalysts), C833, C859 (Piers-Grubbs catalysts) CatMETium RF1, CatMETium RF4 (Evonik), nitro-Grela, and UltraLatMet (Apeiron Synthesis).

| | | |
|---|---|---|
| 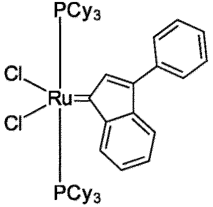 | 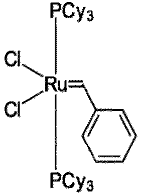 | 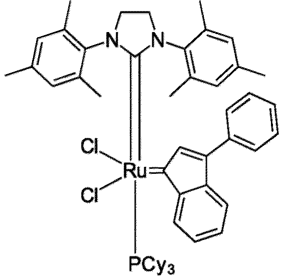 |
| Umicore Grubbs Catalyst M101 | Umicore Grubbs Catalyst M102 | Umicore Grubbs Catalyst M202 |
| 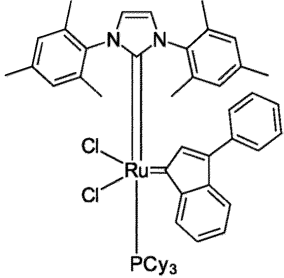 | 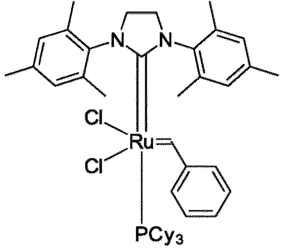 | 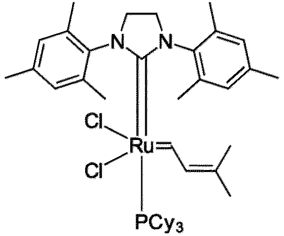 |
| Evonik catMETium RF1 | Umicore Grubbs Catalyst M204 | Umicore Grubbs Catalyst M207 |
| 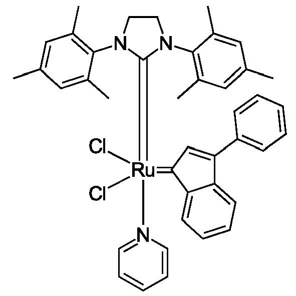 | 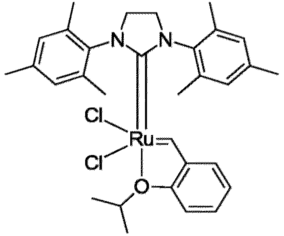 | 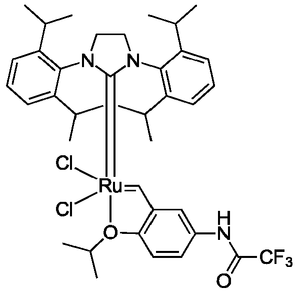 |
| Umicore Grubbs Catalyst M310 | Umicore Hoveyda-Grubbs Catalyst M720 | Umicore Hoveyda-Grubbs Catalyst M711 |
| 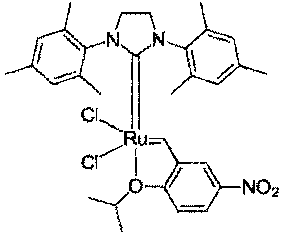 | 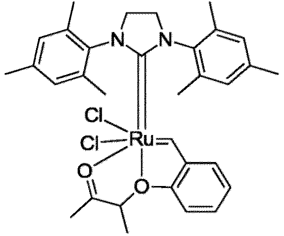 | 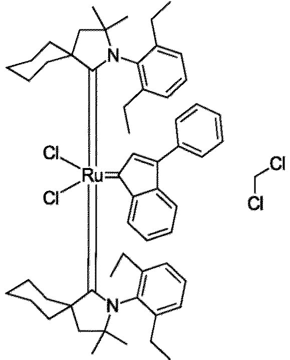 |
| Apeiron nitro-Grela | Grubbs catalyst M520 | Apeiron UltraLatMet |
| 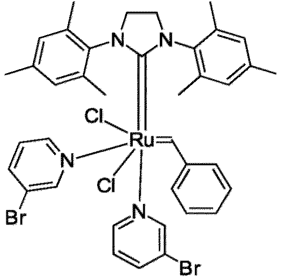 | 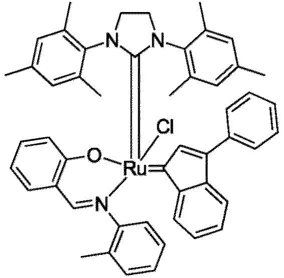 | 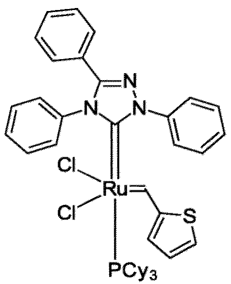 |
| Grubbs Catalyst M300 | Umicore Grubbs catalyst M350 | Catmetium RF4 |
| 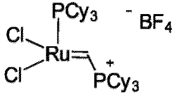 | 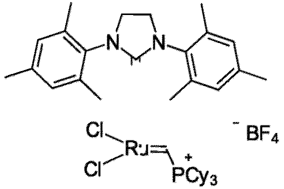 | |
| Piers-Grubbs catalyst C833 | Piers-Grubbs catalyst C859 | |

where: PCy3 denotes a tricyclohexylphosphine group

According to an embodiment of this invention, the ruthenium alkylidene complex may comprise at least one N-Heterocyclic Carbene (NHC), or else at least one N-heteroacyclic carbene, as a ligand, and preferably one or two imidazolin-2-ylidene ligands, more preferably one or two 1-aryl-3-cycloalkyl-imidazolin-2-ylidene ligands, coordinated to the ruthenium atom, in addition to a monodentate, bidentate or tridentate alkylidene ligand. In a preferred embodiment of the invention, the two imidazoline-2-ylidene ligands are two identical 1-aryl-3-cycloalkyl-imidazoline-2-ylidene ligands. In another embodiment of the invention, the two imidazoline-2-ylidene ligands consist of a 1-aryl-3-cycloalkyl-imidazoline-2-ylidene ligand and a 1,3-diaryl-imidazoline-2-ylidene ligand. It is understood that the aryl, imidazolinyl and cycloalkyl groups of the imidazoline-2-ylidene ligands can optionally be substituted. In the case of the 1,3-diarylimidazoline-2-ylidene ligand, the substituents carried by the two aryl groups can be identical or different and are preferably identical, so that the ligand is symmetrical. The additional ligands in the ruthenium complex can for example be chosen from the group consisting of:
- uncharged ligands, notably of the nitrogen or phosphorus-containing type such as trialkylphosphines, tricycloalkylphosphines and triarylphosphines, in particular tricyclohexylphosphine or triphenylphosphine, or trialkylphosphites or pyridines and/or
- anionic ligands, such as halides, in particular chlorides.

The ruthenium complex used according to the invention preferably corresponds to the following formula (1): 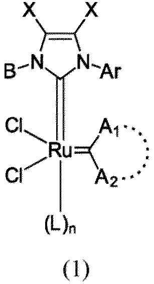 in which:
X denotes a hydrogen or halogen atom or an alkyl or aryl group,
B denotes a cycloalkyl group,
Ar represents an aryl group optionally substituted with at least one substituent selected from: halogen atoms, a trifluoromethyl group, a nitro group, alkyl groups, heteroalkyl groups, alkylammonium groups, and aryl groups substituted with one or more alkyl groups,
L denotes a neutral ligand,
A1 represents a hydrogen atom,
A2 represents an alkyl or alkenyl group, an aryl group or a heteroaryl group,
or else A1 and A2 together form a carbocycle optionally substituted with at least one group selected from the alkyl, heteroalkyl and aryl groups,
n is an integer and has a value of 1 or 2.

The groups X preferably each represent a hydrogen atom.

B is preferably selected from the group consisting of cyclopropyl, cyclobutyl, cyclopentyl, cyclohexyl, cycloheptyl, cyclooctyl, cyclodecyl, cyclododecyl, cyclopentadecyl and isopinocampheyl. More preferably, B is cyclohexyl.

In an embodiment, Ar is selected from a phenyl group substituted with at least one group selected from: chlorine or fluorine atoms, a trifluoromethyl group, a nitro group, a methyl or isopropyl group, a methoxy group, an alkylammonium group and a tolyl group. Still preferably, Ar is selected from the group consisting of 2,4,6-trimethylphenyl, 2,6-diisopropylphenyl, 2,4,6-tris(trifluoromethyl)phenyl, 2,4,6-trichlorophenyl and hexafluorophenyl. Better still, Ar is 2,4,6-trimethylphenyl, also denoted by "mesityl".

In one embodiment, L is a phosphorus-containing ligand, in particular of formula P(R¹)₃, in which P is a phosphorus atom and R¹ is selected from the groups R² and (OR²) in which the groups R² are identical or different and are selected from the hydrogen, halide, alkyl, cycloalkyl, aryl and arylalkyl groups, substituted or unsubstituted, each of the groups comprising up to 20 carbon atoms, and the substituents of said groups being selected from the halides, the alkyl groups and the aryl groups having up to 20 carbon atoms. The aforementioned alkyl, aryl and cycloalkyl groups are as defined above. Much preferably, L is a triaryl or a trialkyl or a tricycloalkyl phosphine. An example of trialkyl phosphine is triisopropylphosphine. The tricycloalkyl phosphine may in particular be selected from the tricyclohexylphosphines and the tricyclopentylphosphines. The triaryl phosphine may notably be selected from triphenylphosphine, tri(methylphenyl)phosphine, trimesitylphosphine, tri(dimethylphenyl)phosphine and tri[(trifluoromethyl)phenyl]phosphine. As a variant, the ligand L may be a dialkyl or a dicycloalkyl phosphine selected for example from dicyclohexylphosphines, di-*tert*-butylphosphines, di-*tert*-butylchlorophosphines and 2-isobutyl-2-phospha-bicyclo-[3.3.1]nonane. Very preferably, L is a tricyclohexylphosphine group.

Alternatively, L may be a group (L1): 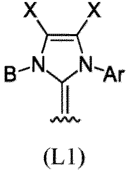 where B, Ar and X are as defined above.

It will be understood that when the integer n has a value of 2, the ligands L may be different from one another or identical to one another. In one embodiment of the invention, n has a value of 1 and L is a phosphine trisubstituted with an alkyl or aryl group, a phosphite trisubstituted with an alkyl or aryl group or a group (L 1). In another embodiment, n has a value of 2 and each ligand L is a pyridine, which is optionally substituted.

In one embodiment of the invention, A2 represents a vinyl, methyl, thiophenyl or phenyl group. In another embodiment, A1 and A2 together form an indenylidene group, optionally substituted. Preferably, the complex of formula (1) corresponds to one of the following formulas (1a) and (1b) or mixtures thereof: 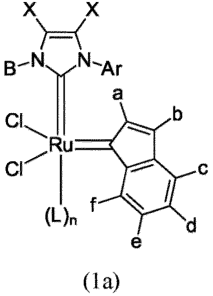 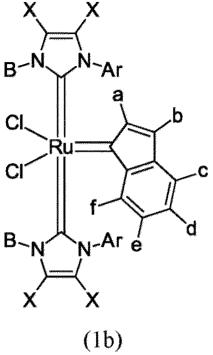 in which B, Ar and X are as defined above; L is a phosphorus-containing uncharged ligand as defined above; a, b, c, d, e and f are selected independently of one another from the group consisting of a hydrogen atom, an alkyl group, a heteroalkyl group and an aryl group, or a and b may form together a hydrocarbon ring optionally substituted by at least one group selected from alkyl, halogeno and alkoxy; n is an integer and has a value of 1 or 2.

Preferably, a, c, d, e and f represent a hydrogen atom and b represents a phenyl group.

Preferred examples of metathesis catalysts that may be used according to the invention are illustrated below.

| | | |
|---|---|---|
| 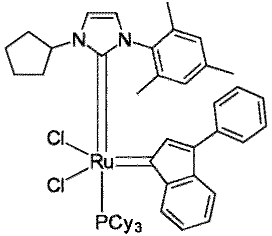 | 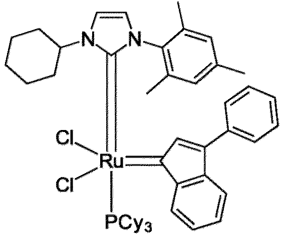 | 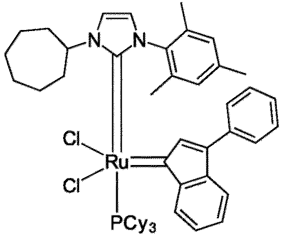 |
| 897 | 911 | 925 |
| 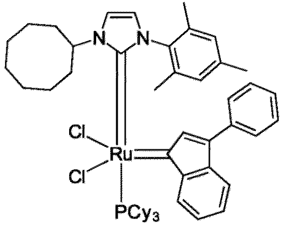 | 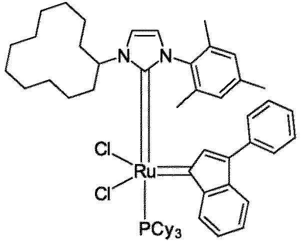 | 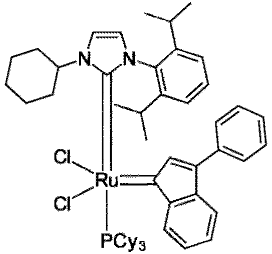 |
| 939 | 996 | 953 |
| 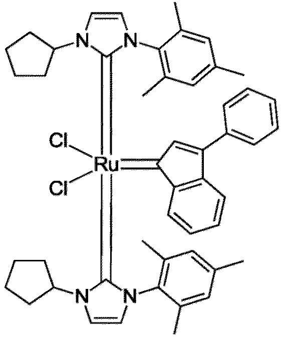 | 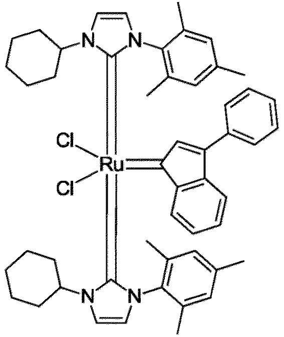 | 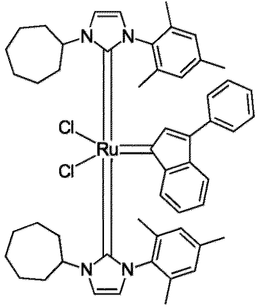 |
| 870 | 899 | 927 |
| 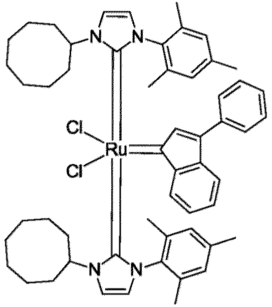 | 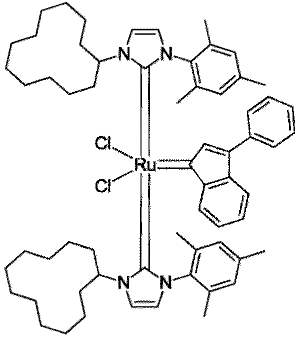 | 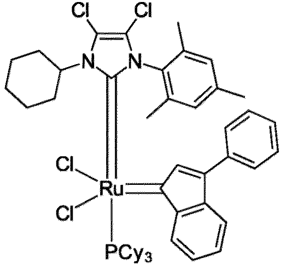 |
| 955 | 1067 | 979 |
| 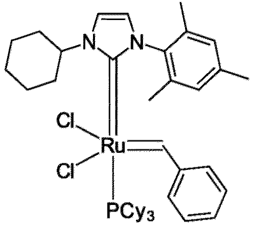 | 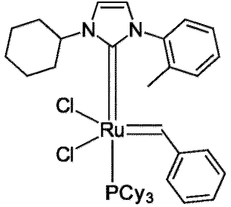 | 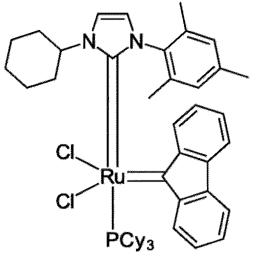 |
| 791 | 763 | 885 |
| 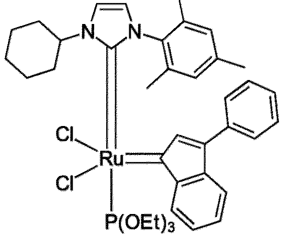 | 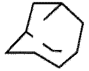 | 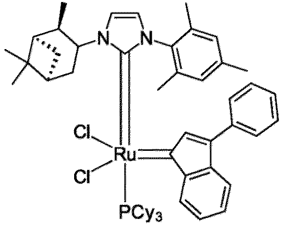 |
| 795 | 962 | 964 |
| 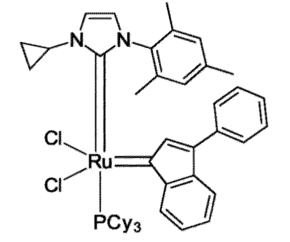 | | |
| 867 | | |

where: PCy3 denotes a tricyclohexylphosphine group and P(OEt)₃ denotes a triethylphosphite group.

The ruthenium complex used according to the invention may notably be prepared by the method described in patent application WO2014/091157, starting from a 1,3-disubstituted imidazolium salt and a ruthenium complex precursor, such as the precursors P1, P2 or P3 shown below. 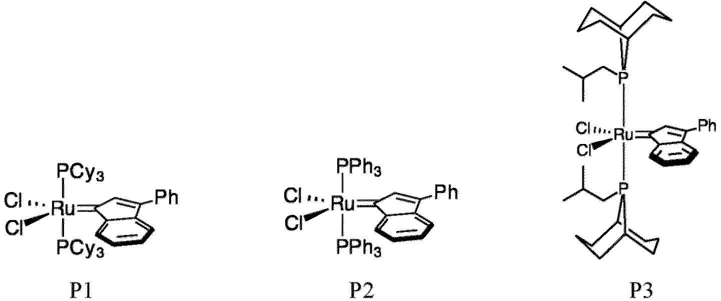 where: Ph denotes a phenyl group, PCy3 denotes a tricyclohexylphosphine group and PPh₃ denotes a triphenylphosphine group.

The imidazolium salt may itself be prepared as described in WO 2014/091156 or in WO 2020/037135.

In a preferred embodiment, the method of the invention is carried out in the presence of a complex of formula (1b), alone or mixed with a complex of formula (1a) preferably having the same groups Ar, B and X. The molar ratio of the complex of formula (1a) to the complex of formula (1b) is advantageously between 99:1 and 1:99, and preferably between 5:95 and 95:5. Better still, the molar ratio of the complex of formula (1a) to the complex of formula (1b) is between 20:80 and 80:20.

### Additional compounds

Under some circumstances, especially in the case where a metathesis catalyst of formula (1b) or UltraLatMet^{®} is used, alone or mixed with another metathesis catalyst, a metathesis activator or a photoinitiator may be added to the reaction mixture, in steps (1) and/or (3)/(B) of the process, in order to activate these latent metathesis catalysts.

Examples of photoinitiators are benzoins, benzoin ethers, acetophenones, α-hydroxy acetophenones, benzil, benzil ketals, anthraquinones, phosphine oxides, acylphosphine oxides, α-hydroxyketones, phenylglyoxylates, α-aminoketones, benzophenones, thioxanthones, xanthones, acridine derivatives, phenazine derivatives, quinoxaline derivatives, triazine compounds, benzoyl formates, aromatic oximes, metallocenes, acylsilyl or acylgermanyl compounds, camphorquinones, polymeric derivatives thereof, and mixtures thereof, such as 2-(4-methoxystyryl)-4,6-bis(trichloromethyl)-1,3,5-triazine, N-hydroxynaphthalimide triflate tetraphenylborate dimesitylimidazolium salt and 2-isopropylthioxanthone.

Examples of metathesis activators are metal complexes having at least one organic ligand, in particular copper or ruthenium complexes having at least one organic ligand, such as SIPᵣCuCl where SIPᵣ designates 1,3-bis-(2,6-diisopropylphenyl)-2-imidazolidinylidene, and RuCl₂(PPh₃)₃, where PPh₃ designates a triphenylphosphine group; or an acidic metathesis activator such as Lewis acids, notably the halides of gold, of copper, of silver, of manganese, of iron, of magnesium, of zinc, of boron, of ruthenium or of aluminium or the compounds of formula ZnR₂, SnR₂, SnR₄ or SiR₄, AlR₃, MgR₂ where the groups R denote, independently of one another, a halogen atom or an alkyl, cycloalkyl, alkenyl, phenyl or benzyl group, as defined above; or an acidic metathesis activator selected from the Brønsted acids such as organic or inorganic acids, notably hydrochloric acid, hydrobromic acid, iodic acid, hydrofluoric acid, sulfuric acid, nitric acid, periodic acid, the sulfonic acids such as methanesulfonic acid, or the mono- or polycarboxylic acids. The Lewis acid is preferably selected from AuCl, CuCl, SiCl₄ and PhSiCl₃, where Ph designates a phenyl group, more preferably CuCl. The Brønsted acid is preferably hydrochloric acid.

Hereinafter, "metathesis activator" will denote both a single or a mixture of activators. Preferred metathesis activators are Lewis acids and Brønsted acids.

In addition, metathesis retardants may be used in steps (1) and/or (3)/(B) of the process, if needed.

Examples of metathesis retardants are phosphites of formula P(OR)₃ and phosphines of formula PR₃ where the R groups independently represent H, alkyl, cycloalkyl, heteroaryl or aryl optionally substituted by one or more groups selected from halogen atoms and alkyl groups. Alternatively, two R groups may form together a ring optionally substituted by a -(R'O)₂POR" group where the R' and R" groups independently represent H, alkyl, cycloalkyl, heteroaryl or aryl optionally substituted by one or more groups selected from halogen atoms and alkyl groups. R may thus be an alkyl group, notably ethyl, or phenyl substituted by an alkyl group such as a methyl, ethyl, isopropyl or nonyl group. Examples of metathesis retardants are triphenylphosphine, tributylphosphine, tricyclohexylphosphine, triphenylphosphite, triethylphosphite, tri-n-butylphosphite and tri(nonylphenyl)phosphite. Other metathesis retardants are nitrogen-containing compounds such as pyridine, DMAP, benzonitrile and hydroperoxydes.

In a preferred embodiment, steps (1) and/or (3)/(B) of the method of this invention are typically carried out in the absence of any additive selected from polymers (such as elastomers) and fillers. However, in other embodiments, the use of polymers such as elastomers (for improving toughness for example) or fillers (for improving material stiffness for example) or adhesion promoters may be needed to tune the properties of the material.

Adhesion promoters comprise at least one compound containing at least two isocyanate groups. Adhesion promoters can be pre-reacted or blended with a compound containing a heteroatom-containing functional group and a metathesis-active olefin.

Examples of adhesion promoters that can be use for this purpose are methylene diphenyl diisocyanate (MDI) including any mixture of its three isomers 2,2'-MDI, 2,4'-MDI, and 4,4'-MDI; liquid MDI; solid MDI; hexamethylene diisocyanate trimer; hexamethylene diisocyanate; isophorone diisocyanate; 4,4'methylene bis(cyclohexyl isocyanate); polymeric MDI; MDI prepolymer; liquid carbodiimide modified 4,4'-MDI; toluene diisocyanates; tetramethylxylene diisocyanate; and isomers of isocyanato-[(isocyanatocyclohexyl)methyl] cyclohexane. Examples of compounds containing a heteroatom-containing functional group and a metathesis-active olefin that can be used for this purpose are hydroxyl-terminated polybutadiene, 5-norbornene-2-methanol (NB-MeOH); 2-hydroxyethyl bicyclo[2.2.1]hept-2-ene-5-carboxylate (HENB); and allyl alcohol.

Examples of polymers that can be used for this purpose are ethylene propylene diene monomers (EPDM), thermoplastic elastomers such as styrene butadiene styrene (SBS), styrene ethylene butylene styrene (SEBS), styrene ethylene ethylene butylene styrene (SEEBS), styrene ethylene ethylene propylene styrene (SEEPS) and polybutadiene (PB).

Fillers are usually selected from organic and inorganic fillers and mixtures thereof, such as silicon carbide, metal, ceramic or glass beads; calcium carbonate; silica particles; carbon blacks; carbon nanotubes; graphene nanoplatelets; boron nitride, cellulose nanocrystals; silicates and aluminosilicates such as talc, mica and clays; glass, ceramic, carbon, vegetable, metal or rock fibers; polymeric fibers such as aramid or polyethylene; and mixtures thereof.

Other additives that may be used in this invention are non-reactive lubricants or plasticizers such as diisodecylphthalate; pigments and/or dyes; antioxidants and oxygen scavengers such as sterically-hindered phenolic compounds or hindered amines light stabilizers (HALS); surfactants or amphiphilic polymers; flame retardants; UV absorbers; ageing and light stabilizers; impact modifiers; antistatic agents; release agents; swelling agents; antimicrobial agents and fungicides; heat stabilizers including metal oxides such as titanium, cerium or iron oxides and peroxides; hydrolysis stabilizers such as carbodiimide; adhesion promoters such as isocyanates, acrylates or silanes; and mixtures thereof.

In addition, this process may be conducted in the presence of at least one solvent. Solvents are usually selected from the group consisting of: water; alcohols; aliphatic hydrocarbons, in particular n-hexane, isoparaffins and liquid paraffins; alicyclic hydrocarbons such as cyclohexane or dimethylcyclohexane; aromatic hydrocarbons such as benzene, toluene and xylene; oxygenated compounds, in particular ketones such as acetone, ethers such as diethyl ether, esters such as ethyl acetate and oxygenated heterocycles such as tetrahydrofuran; halogenated compounds such as dichloromethane; and mixtures thereof.

In a preferred embodiment, however, the process is conducted in the absence of any solvent, except the solvent possibly used to carry the catalyst and/or the metathesis activator (if any) in steps (1) and/or (3)/(B).

### Method

As mentioned previously, the method of this invention includes a step (A) of providing a prepolymer-containing monomer composition having a target viscosity, wherein said prepolymer-containing monomer composition comprises a cyclic olefin and a prepolymer of said cyclic olefin and optionally of a chain-transfer agent.

Step (A) is typically performed by providing a kit comprising two separate compositions, the first of which comprises the prepolymer-containing monomer composition and the second of which comprises a metathesis catalyst.

In an embodiment of this invention, the prepolymer-containing monomer composition is prepared in step (1) which consists of contacting a first amount of polymerizer with a monomer composition comprising at least one cyclic olefin and optionally at least one chain-transfer agent, as well as additional compounds if needed (such as those described previously).

The polymerizer, the monomers and the additional components, if any, may be contacted with each other in any order. Contacting may generally be performed under stirring or using mixing machines until a homogeneous mixture is obtained. For this purpose, the polymerizer, especially the metathesis catalyst, and/or the metathesis activator (if any) may each independently be in the form of a solid or a liquid, dispersed or solubilized in the cyclic olefin and/or in a suitable solvent.

The molar ratio between the cyclic olefin and the chain-transfer agent (if present) may typically range from 5:1 to 10,000:1, preferably from 40:1 to 5,000:1, for instance from 50:1 to 500:1.

Moreover, in case a metathesis catalyst is used in step (1), it may represent for example between 0.001 and 10 000 ppm (by weight), preferably between 0.01 and 1 000 ppm (by weight) and more preferably between 0.1 and 500 ppm (by weight), relative to the monomers. In the case of a ruthenium catalyst, the amount of metathesis catalyst used in step (1), relative to the monomers, may be for example between 0.01 and 1 000 ppm (by weight), preferably between 0.1 and 500 ppm (by weight) and more preferably between 1 and 100 ppm (by weight).

In any case, the amount of polymerizer will be readily adjusted by the skilled person, taking into account the nature of the polymerizer, the optional presence of a chain-transfer agent and the target viscosity to be reached after step (1), which is necessarily lower than the target viscosity to be reached after maturation. Typically, the "target viscosity" means a viscosity within a target range of viscosity. The viscosity of the prepolymer-containing monomer composition depends itself on the composition and the conversion rate of the monomers. In any case, in order to obtain a prepolymer-containing monomer composition, the conversion rate of the cycloolefin will be between more than 0% and much less than 100%, typically less than 90%. From a practical point of view, the use of a chain-transfer agent in step (1) of the process allows an easier control of the viscosity and is thus preferred.

When present, the molar ratio of the metathesis activator to the metathesis catalyst is advantageously between 0.1:1 and 500:1, preferably between 0.5:1 and 100:1. In any case, a person skilled in the art will know how to adjust this ratio depending on the nature of the activator. For example, in the case of Lewis acids, the molar ratio of the activator to the catalyst may be between 0.2:1 and 5:1, whereas it may range from 5:1 to 500:1 in the case of Brønsted acids.

When present, the molar ratio of the metathesis retardant to the metathesis catalyst is advantageously comprised between 1:1000 and 1000:1, preferably between 100:1 and 1:100 and more preferably between 10:1 and 1:10 and may be easily adjusted by the skilled artisan depending on the metathesis retardant used.

In step (2) of the process, the prepolymer-containing monomer composition is matured until a target viscosity is reached. Maturing may be performed at room temperature (such as 18-25°C) for 1 to 30 days, preferably for 3 to 15 days. Alternatively, it may be performed at a temperature between 30 and 120 °C, preferably from 30 to 60°C, for a shorter time, typically from 1 minute to 48 hours, preferably from 10 minutes to 8 hours. This step allows the viscosity to increase gradually until reaching the desired value, which may be between 10 and 1 000 000 mPa.s, preferably between 50 and 100 000 mPa.s, more preferably between 100 and 10 000 mPa.s, for instance between 100 and 1 000 mPa.s. The viscosity may be measured at 21°C by means of a viscosimeter at a shear rate between 0.01 to 100 s⁻¹. It may be easily adjusted by controlling the concentration of chain-transfer agent (if any) and polymerizer in step (1) and the maturation conditions in step (2). Moreover, maturation may be stopped at the desired viscosity using a scavenger which may be selected from compounds known to quench or scavenge the polymerizer, such as ethyl allyl ether or ethyl vinyl ether in the case of metathesis catalysts. In any case, the target viscosity will depend on the way the resin composition obtained in step (3)/(B) should be shaped in step (4)/(C).

In the case where metathesis is performed in the step (1) of the process, and when a scavenger is used, the molar ratio of the metathesis scavenger to the metathesis catalyst is advantageously comprised between 1:100 and 150:1, preferably between 50:1 and 1:50, preferably between 10:1 and 1:10 and more preferably between 1:5 and 5:1.

It should be noted that, under some circumstances, especially in the case where a metathesis catalyst of formula (1b) is used in step (1) of this process, alone or mixed with a metathesis catalyst of formula (1a), step (2) may further comprise activating these latent metathesis catalysts of formula (1b) other than by heating. Activation may be performed by electromagnetic-wave initiation, for example by using UV or laser irradiation, optionally in the presence of a photoinitiator.

Once the prepolymerized composition has matured, its viscosity remains substantially stable for at least 12 hours, preferably at least one week, more preferably at least one month or even at least three months, i.e. that it does not vary by more than 50%, preferably by more than 40%, more preferably by more than 30% within this period of time.

Importantly, the prepolymer is not isolated from the prepolymer composition after step (2).

Step (3)/(B) of the process comprises blending a second amount of polymerizer selected from metathesis catalysts with the prepolymer-containing monomer composition, so as to obtain a resin composition. The amount of metathesis catalyst used in step (3)/(B), relative to the monomers and additional components, if any, may be for example between 1 and 100,000 ppm (by weight), preferably between 10 and 10,000 ppm (by weight). When present, the molar ratio of the metathesis activator and/or the metathesis retardant to the second amount of metathesis catalyst may be within the ranges mentioned previously.

It should be noted that a cycloolefin may be added to the resin composition, which is preferably the same as, but may also be different from, the cycloolefin used in step (1) and which may be selected among those previously listed.

Step (3)/(B) is generally performed under stirring or using mixing machines until a homogeneous mixture is obtained, which is referred to as a "resin composition".

Step (4)/(C) of the process comprises shaping the resin composition, for instance molding the same so as to obtain a three-dimensional article or coating the resin composition onto a substrate.

Shaping may be performed by a method selected from hand painting, spraying, machine or manual-casting, Reaction Injection Molding (RIM), Reinforced Reaction Injection Molding (R-RIM), Resin Transfer Molding (RTM), Long Fiber Injection Molding (LFI), Vacuum Infusion Processing (VIP), 3D printing, pultrusion and filament winding, preferably by RIM or casting.

In the case where the resin composition is molded, blending is preferably carried out in the mixing chamber of an injection or molding device, such as the mixing head of a RIM machine, or a static or dynamic mixer.

In addition, during the molding step, the resin composition may be mixed with, or applied onto, fillers provided within the mold.

Examples of fillers are notably those intended to adjust the density, the mechanical properties and/or the glass transition temperature of the polymer obtained at the end of the method according to the invention. They may be fibers, for instance in the form of chopped fibers or in the form of a non-woven material. Examples of fibers that may be used for this purpose include: inorganic fibers such as metal fibers, glass fibers ceramic fibers and rock fibers; organic fibers such as carbon fibers, vegetable fibers and polymer (such as polyolefin or aramid) fibers ; and mixtures thereof.

In another embodiment, the fillers may be selected from powders, granules, beads, macro or microspheres and particles of any shape based on glass, metal oxides, metal carbides, metal nitrides, ceramic, fly-ash or silicon carbide, glass beads or bubbles; calcium carbonate; silica particles; carbon blacks; carbon nanotubes; graphene nanoplatelets; boron nitride, cellulose nanocrystals; silicates and aluminosilicates such as talc, mica and clays; or else thermoplastic or thermosetting polymers or elastomers. These fillers may optionally be coated to improve their compatibility with the cycloolefin. The above fillers are preferably added in an amount ranging from 0.05 vol% to the maximum packing amount of the filler, for instance up to 95 vol%. In an embodiment, the fillers represent from 1 to 80 vol% and more preferably from 10 to 60 vol% relative to the total volume of the polymer material.

The fillers described above may notably be used for making syntactic foams. In this case, macro-elements of any shape are generally used as fillers, such as macrospheres, generally hollow and based on thermosetting resin, thermoplastic resin, ceramic or metal such as steel, or glass. The fillers usable in the manufacture of syntactic foams generally have a density in the range from 0.1 to 0.7.

Instead of molding the resin composition, it may be infused or coated onto a substrate, which may for instance comprise a material selected from: metals, fusion-bonded epoxy or other polymeric substrates or inorganic fibers (such as metal, glass, ceramic or rock fibers) or organic fibers (such as carbon, vegetable or polymer). The fibers may optionally be arranged in the form of a woven or non-woven material or in the form of a fabric.

The resin composition is then cured.

For this purpose, depending *inter alia* on the desired final material properties, the resin may be heated or not. Curing may thus be carried out at a temperature from 0 to 250 °C, preferably from 0 to 200 °C and more preferably from 20 to 150°C, for a time up to 30 days, preferably from 5 seconds to 48 h and more preferably from 10 seconds to 16 h and still more preferably from 10 seconds to 1h. In addition, it is advantageously carried out at atmospheric or low pressure.

### Uses

The method according to the invention may be useful in the manufacture of a polymer material selected from the group consisting of: parts for terrestrial, nautical or aerospace vehicles (including cars, tractors, trucks, trains, buses, airplanes and space shuttles), such as bumpers, anti-vibration or dampening parts, protection for blades of wind turbines, sports articles (such as shoes), offshore installations (notably buoys and pipelines), coatings (including thermal insulation coatings, anti-corrosion paints, insulation covers or field joint coatings); chemical equipment including containers, gaskets and pipes, sealants, adhesives, molds, water treatment equipment, camping equipment, military items such as bulletproof vests, electromagnetic shields, or for repairing cracks in masonry structures, notably in concrete, stone or brick ; preferably the polymer material is a vehicle part, more preferably an automotive part.

### EXAMPLES

The invention will be better understood from the following examples, which are given purely for purposes of illustration and do not aim to limit the scope of the invention, which is defined by the accompanying claims.

### Materials and methods:

In the following examples, the ratios of activator and catalyst are expressed by weight, based on the total weight of monomers, including the chain-transfer agent if present in the mixture.

Viscosity was measured using a Brookfield viscosimeter (type DV1-LVT). In order to measure the viscosity of the resin composition, the viscosimeter was fitted with a suitable spindle LV2, LV3 or LV4 with the highest possible rotation speed ranging from 0.3 rpm to 100 rpm (regarding the maximum measurable viscosity) in order to maximize the torque value and characterized by a shear rate ranging from 0.01 s⁻¹ to 100 s⁻¹ for these spindles, depending on the spindle rotation speed. For instance, spindle LV2 was rotated at 100 rpm. The resin composition was thermoregulated at T = 21°C using preheated water bath. After viscosity stabilisation, the value was recorded.

Tensile tests were performed on at least 3 tensile specimens 1B (110 x 15 x 4 mm) according to the ISO Standard 527-1 & -2 on a Shimadzu tensile tester (AGS-X50kN) at 50 mm.min⁻¹ equipped with force cell (F = 50 kN).

Glass transition temperature was measured with a dynamic mechanical analyzer (DMA) DMA Q800 (TA Instruments) used in bending from 30 to 240 °C at 3 °C/min and at f = 1 Hz in bending mode (single cantilever) on 17.5 x 5 x 4 mm specimens.

Hardness (Shore D): 6 measurements were performed on 2 to 4 mm-thick samples using Shore D durometer PCE-DDD-10 (PCE Instruments)

Odor test: Plates were exposed to a temperature of 80°C for 2 hours in an odorless closed vessel. Odor evaluation was performed by a trained panel of three people according to the VDA 270 Standard, using a scale of 1 to 6 wherein a value of 1 means that the odor is not perceptible and a value of 6 is considered intolerable. The conventional upper limit acceptable for this test is 3.

### Example 1: Preparation of a polymer material according to this invention

100 mol of DCPD/TCPD mixture (90/10 wt/wt) was mixed with 1 mol of 1-decene as a chain-transfer agent, 0.9 ppm of CuCl as a metathesis activator and 9 ppm of Catalyst 899 (VIPO FRANCE SAS) solubilized at 1 wt.% in toluene.

The prepolymer composition thus formed, was matured for 336 h at room temperature, leading to a viscosity of 470 mPa.s.

33 ppm of CuCl were added to this prepolymer composition, which was then carefully mixed with 400 ppm of Catalyst 899 (dispersed at 2 wt.% in mineral oil), so as to produce a resin composition. This resin was transferred into a cartridge, then injected into a pre-heated mold (one face at 60°C and the other at 80°C) with a pneumatic dosing gun and cured for 2 minutes. The plates thus obtained are designated in the following of this description as Plates 1 (according to this invention).

### Comparative Example 2: Preparation of comparative polymer materials

### Example 2-1: low viscosity

A DCPD/TCPD mixture (90/10 wt/wt) was mixed with 33 ppm of CuCl.

This mixture had a viscosity of 11 mPa.s and was carefully mixed with 400 ppm of Catalyst 899 (dispersed at 2 wt.% in mineral oil). The mixture was transferred into a cartridge then injected into a pre-heated mold (one face at 60°C and the other at 80°C) with a pneumatic dosing gun and cured for 2 minutes. The plates thus obtained were designated hereafter as Plates A.

### Example 2-2: high viscosity with elastomer

DCPD/TCPD (90/10 wt/wt) was mixed with CuCl (33 ppm) then 3.2 wt. % of Styrene-Ethylene-Ethylene-Propylene-Styrene or SEEPS (Septon^{®} 4055 from KURARAY) elastomer and the mixture was kept for 4.5h at 40°C. The mixture reached a viscosity of 458 mPa.s. It was then carefully mixed with 400 ppm of Catalyst 899 (dispersed at 2 wt.% in mineral oil). The mixture was transferred into a cartridge then injected into a pre-heated mold (one face at 60°C and the other at 80°C) with a pneumatic dosing gun and cured for 2 minutes. The plates thus obtained were designated hereafter as Plates B.

### Example 3: Stability

The viscosity of the composition prepared in Example 1 is 470 mPa.s after maturation; 510 mPa.s after 1 month (storage at room temperature = 21°C).

### Example 4: Sensory analysis

The visual aspect and the odor of the plates prepared in Examples 1 and 2 were assessed.

The results are summarized in the following table.

**Table 1**

| Plates | Visual aspect | Presence of bubbles | Odor rate |
|---|---|---|---|
| 1 | Transparent | No | 3 |
| A | Transparent | Yes | 3 |
| B | Translucent | No | 5.5 |

Injection of a low viscosity mixture leads to flow turbulences and low compaction pressure during injection, which leads to Plates A having bubbles therein. Injection of high viscosity mixtures limited flow turbulences and allowed to obtain plates (1 and B) without bubbles. Nevertheless, the presence of a polymer in Plates B led to high odor rate and lower transparency, contrary to Plates 1 of this invention.

### Example 5: Thermomechanical properties

The results of the experiments conducted on Plates 1, A and B prepared as described in Examples 1 and 2, are provided in Table 2.

**Table 2**

| **Plate No.** | **Young Modulus [GPa]** | **Strain at Break [%]** | **Hardness [Sh D]** | **Glass transition [°C]** |
|---|---|---|---|---|
| A | 2.1 | 4 | 83 | 163 |
| 1 | 2.1 | 3 | 84 | 163 |
| B | 1.9 | 20 | 81 | 170 |

It can be seen from Table 2 that the plates prepared according to this invention (Plates 1) have properties similar to those of comparative Plates A. Logically, the presence of a polymer as toughening agent in Plates B leads to decreased stiffness and increased strain at break of the final material.

## Claims

1. A method for preparing a polymer material, comprising the successive steps of:
(A) providing a prepolymer-containing monomer composition having a target viscosity, wherein said prepolymer-containing monomer composition comprises a cyclic olefin and a prepolymer of said cyclic olefin and optionally of a chain-transfer agent,
(B) adding a polymerizer selected from metathesis catalysts to said prepolymer-containing monomer composition, so as to obtain a resin composition, and
(C) curing said resin composition.

2. The method according to claim 1, which comprises the successive steps of: (1) preparing a prepolymer-containing monomer composition from (i) a polymerizer selected from catalysts and initiators and (ii) a monomer composition comprising a cyclic olefin and optionally a chain-transfer agent, (2) maturing the prepolymer-containing monomer composition until a target viscosity is reached, (3) adding a second amount of a polymerizer selected from metathesis catalysts, so as to obtain a resin composition, and (4) curing said resin composition.

3. The method according to claim 1 or 2, **characterized in that** the cyclic olefin is selected from bridged cycloalkenes such as dicyclopentadiene, tricyclopentadiene, tetracyclopentadiene, norbornene and norbornadiene; dimethanooctahydronaphthalene; non-bridged cycloalkenes such as cyclopentene, cyclohexene, cycloheptene, cyclooctene, cyclododecene and cyclooctadiene; substituted cyclic olefins such as ethylidene norbomene, alkyl norbornenes, norbomene maleic anhydride, norbomene methanol, norbomene triethoxysilane, norbomene methylamine and dimethanoloctahydronaphthalene (DMON); and mixtures thereof, preferably the cyclic olefin is selected from dicyclopentadiene, tricyclopentadiene, tetracyclopentadiene, norbornene, norbornadiene, ethylidene norbomene, decylnorbomene, octylnorbomene, hexylnorbomene, tolylnorbornene and mixtures thereof, more preferably the cyclic olefin is a mixture of dicyclopentadiene with tricyclopentadiene.

4. The method according to any one of claims 1 to 3, **characterized in that** the chain-transfer agent is selected from the group consisting of: acyclic alkenes, preferably linear alkenes, such as hexene, octene, decene, undecene, dodecene; alkynes such as 1-hexyne, 1-octyne, 12-decyne, 1-dodecyne, 4-methyl-1-pentyne, phenylacetylene; cyclic compounds such as vinyl norbomene or styrene; allyl glycidyl ether, allyl isocyanate, isocyanatodecene, isocyanatoundecene, triethoxyvinyl silane, octenol, decenol, undecenol or 5-hexyn-1-ol; and mixtures thereof.

5. The method according to any one of claims 2 to 4, **characterized in that** the polymerizer of step (1) is selected from: radical generators, metathesis catalysts, ionic initiators and addition catalysts, preferably the polymerizer of step (1) is selected from metathesis catalysts.

6. The method according to any one of claims 1 to 5, **characterized in that** the metathesis catalyst is selected from group VIII, group VII, group VI and group V metal complexes, preferably the metathesis catalyst comprises at least one iron, rhenium, vanadium, ruthenium, tungsten, tantalum, osmium or molybdenum complex, more preferably at least one ruthenium, tungsten or molybdenum complex and still preferably one or more ruthenium alkylidene complexes.

7. The method according to claim 6, **characterized in that** the ruthenium alkylidene complex comprises at least one N-Heterocyclic Carbene (NHC) or else at least one N-heteroacyclic carbene, as a ligand, and preferably one or two imidazolin-2-ylidene ligands, more preferably one or two 1-aryl-3-cycloalkyl-imidazolin-2-ylidene ligands, coordinated to the ruthenium atom, in addition to a monodentate, bidentate or tridentate alkylidene ligand.

8. The method according to any one of claims 1 to 7, **characterized in that** shaping in step (4)/(C) comprises molding the resin composition so as to obtain a three-dimensional article or coating the resin composition onto a substrate.

9. The method according to claim 8, **characterized in that** shaping is performed by a method selected from hand painting, spraying, machine or manual-casting, Reaction Injection Molding (RIM), Reinforced Reaction Injection Molding (R-RIM), Resin Transfer Molding (RTM), Long Fiber Injection Molding (LFI), Vacuum Infusion Processing (VIP), 3D printing, pultrusion and filament winding, preferably by Reactive Injection Molding or casting.

10. The method according to any one of claims 1 to 9, **characterized in that** the polymer material is selected from the group consisting of: parts for terrestrial, nautical or aerospace vehicles, anti-vibration or dampening parts, protection for blades of wind turbines, sports articles, offshore installations, coatings, chemical equipment including containers, gaskets and pipes, sealants, adhesives and molds, water treatment equipment, camping equipment, military items such as bulletproof vests, electromagnetic shields, or for repairing cracks in masonry structures, notably in concrete, stone or brick ; preferably the polymer material is a vehicle part, more preferably an automotive part.
